(19) **Europäisches Patentamt**
**European Patent Office**
**Office européen des brevets**

(11) **EP 3 145 764 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(21) Anmeldenummer: **15726891.3**

(22) Anmeldetag: **20.05.2015**

(51) Int Cl.:
*B60T 1/14* (2006.01)    *B61H 7/08* (2006.01)
*B60T 13/74* (2006.01)    *B60T 17/22* (2006.01)

(86) Internationale Anmeldenummer:
**PCT/EP2015/061185**

(87) Internationale Veröffentlichungsnummer:
**WO 2015/177248 (26.11.2015 Gazette 2015/47)**

(54) **VERFAHREN ZUR STEUERUNG DES EINSATZES VON SCHIENENBREMSSYSTEMEN, INSBESONDERE WIRBELSTROMBREMSSYSTEMEN, VON IN EINEM STRECKENNETZ BETRIEBENEN SCHIENENFAHRZEUGEN**

METHOD FOR CONTROLLING THE USE OF TRACK BRAKE SYSTEMS, IN PARTICULAR EDDY CURRENT BRAKE SYSTEMS, OF RAIL VEHICLES OPERATED IN A RAILWAY NETWORK

PROCÉDÉ DE COMMANDE DE L'UTILISATION DE SYSTÈMES DE FREINAGE FERROVIAIRE, EN PARTICULIER DE SYSTÈMES DE FREINAGE À COURANTS DE FOUCAULT, DE VÉHICULES FERROVIAIRES FONCTIONNANT DANS UN RÉSEAU FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2014 DE 102014107225**

(43) Veröffentlichungstag der Anmeldung:
**29.03.2017 Patentblatt 2017/13**

(73) Patentinhaber: **KNORR-BREMSE Systeme für Schienenfahrzeuge GmbH 80809 München (DE)**

(72) Erfinder:
• **WALTER, Manfred**
  **85375 Neufahrn (DE)**
• **GRUNWALD, Torsten**
  **82418 Seehausen am Staffelsee (DE)**
• **LEHMANN, Henry**
  **A-2371 Hinterbrühl (AT)**
• **AURICH, Stefan**
  **86316 Friedberg (DE)**

(56) Entgegenhaltungen:
WO-A2-2009/036960     DE-A1- 2 830 672
DE-A1-102011 110 053     DE-A1-102012 108 395

## Beschreibung

Die vorliegende Erfindung betrifft ein Verfahren zur Steuerung des Einsatzes von Schienenbremssystemen, insbesondere Wirbelstrombremssystemen, von in einem Streckennetz betriebenen Schienenfahrzeugen in zumindest einem vorgegebenen Streckenabschnitt.

Bei einer Wirbelstrombremse eines Schienenfahrzeugs werden über einen Elektromagnet Wirbelströme in der Schiene erzeugt. Die Wirbelströme erzeugen ein Magnetfeld, das nach der Lenzschen Regel dem äußeren Feld entgegen wirkt. Die hierdurch entstehende Kraft wirkt auf den Elektromagnet der Wirbelstrombremse und verzögert damit das Schienenfahrzeug. Bei einer Wirbelstrombremse besteht kein Kontakt zwischen dem Bremsmagnet und der Schiene. Die Wirbelstrombremse unterliegt daher keinem Verschleiß, ist geruchs- und lärmfrei und arbeitet unabhängig von dem Kraftschluss zwischen Rad und Schiene. Die Wirbelstrombremse kann somit auch bei nassen Schienen, Laub oder sonstigen Verschmutzungen auf der Schiene zuverlässig eingesetzt werden. Darüber hinaus kann die Bremskraft der Wirbelstrombremse durch Regelung der Stromzufuhr des Elektromagneten stufenlos geregelt werden, so dass die Wirbelstrombremse auch bei Betriebsbremsungen zum Einsatz kommen kann.

Jedoch wird bei einer Wirbelstrombremse die abzuführende Bremsenergie in den Schienen in Wärme umgewandelt. Durch diesen Energieeintrag wird die Schiene thermisch stark beansprucht. Bei einer Bremsung eines Schienenfahrzeugs mit einer Wirbelstrombremse kann die Temperatur der Schiene um bis zu 5 K steigen. Insbesondere im Sommer können die Schienen bei entsprechend starker Sonneneinstrahlung und mehreren Bremsungen an demselben Streckenpunkt daher Temperaturen erreichen, die derart hohe mechanische Spannungen in der Schiene verursachen, dass die Lagestabilität der Gleise beeinträchtigt wird. Wirbelstrombremsen kommen bei Betriebsbremsungen derzeit daher nur auf Feste Fahrbahn-Strecken uneingeschränkt zum Einsatz. Darüber hinaus können die von der Wirbelstrombremse bei einer Bremsung erzeugten Magnetfelder Störungen in der am Gleis montierten Sicherungstechnik, wie beispielsweise Achszählern, verursachen, so dass auch in diesen Bereichen der Einsatz von Wirbelstrombremsen nur bedingt möglich ist. Auch Schnellbremsungen mit Magnetschienenbremsen führen zu einer Schienenerwärmung.

Der Erfindung liegt die Aufgabe zugrunde, ein Verfahren der eingangs genannten Art anzugeben, das es erlaubt, die Einsatzmöglichkeiten von Schienenbremsen, insbesondere Wirbelstrombremsen, zu erweitern.

Das Dokument DE 10 2012 108 395 A1 offenbart ein Verfahren zur Kalkulation einer Fahrempfehlung eines Schienenfahrzeugs mit einem in dem Schienenfahrzeug eingebauten Assistenzsystem, mit einer Berechnungseinheit und einem Datenspeicher, in dem Fahrplan- und Streckeninformationen der zu befahrenden Strecke, physikalische Eigenschaften des Schienenfahrzeuges und ggfs. an dieses angehängte Wagen gespeichert sind, aufweisend die Verfahrensschritte: Erfassen der aktuellen Position des Schienenfahrzeugs, Erfassen der aktuellen Geschwindigkeit des Schienenfahrzeugs, Erfassen momentaner Zustandsparameter der Bremskomponenten des Schienenfahrzeugs, Vergleich der Zustandsparameter von Bremskomponenten mit im Datenspeicher abgespeicherten Sollbereichen der Zustandsparameter der Bremskomponenten, Berechnen der aktuell verfügbaren Bremskraft der Bremskomponenten auf Basis des Vergleichs der Zustandsparameter der Bremskomponenten, Aktualisieren der Fahrempfehlung während der Fahrt unter Berücksichtigung der aktuellen Position und Geschwindigkeit des Schienenfahrzeugs und der aus dem Vergleich der Zustandsparameter der Bremskomponenten erhaltenen aktuell verfügbaren Bremskraft der Bremskomponenten.

Diese Aufgabe wird durch ein Verfahren mit den Merkmalen des Anspruchs 1 gelöst, und insbesondere dadurch, dass die Schienenfahrzeuge bei Einsatz der Schienenbremssysteme, insbesondere Wirbelstrombremssysteme, in dem Streckenabschnitt jeweils einen Ort, Zeit und Bremskraft der jeweiligen Schienenbremsung, insbesondere Wirbelstrombremsung, entsprechenden Datensatz an eine zentrale Datensammelstelle übermitteln und basierend auf den innerhalb eines vorgegebenen Zeitraums für den Streckenabschnitt gesammelten Datensätzen eine für eine Bremsung in dem Streckenabschnitt mit dem Schienenbremssystem, insbesondere Wirbelstrombremssystem, eines den Streckenabschnitt nachfolgend befahrenden Schienenfahrzeugs maximal erlaubte Bremskraft des Schienenbremssystems bzw. Schienenbremskraft, insbesondere Wirbelstrombremskraft, bestimmt wird, um eine maximal zulässige Schienentemperatur nicht zu überschreiten.

Setzt ein Schienenfahrzeug in dem vorgegebenen Streckenabschnitt sein Schienenbremssystem ein, kann dieser Einsatz registriert und Ort, Zeit und Bremskraft der Schienenbremsung an die zentrale Datensammelstelle übermittelt werden. Dies erfolgt bei sämtlichen Schienenfahrzeugen, die in dem vorgegebenen Streckenabschnitt eine Schienenbremsung ausführen. Aus den in der zentralen Datensammelstelle gesammelten Informationen bezüglich der bis zu einem jeweiligen Zeitpunkt aufgrund von Schienenbremsungen stattgefundenen Energieeinträge in das Gleis des vorgegebenen Streckenabschnitts kann dann eine Bremskraft ermittelt werden, mit der das Schienenbremssystem eines den vorgegebenen Streckenabschnitt nachfolgend befahrenden Schienenfahrzeugs maximal betätigt werden darf, um mit einer weiteren Schienenbremsung eine maximal zulässige Schienentemperatur nicht zu überschreiten. Hierdurch können Schienenbremsen, insbesondere Wirbelstrombremsen, auch für Betriebsbremsungen auf Strecken eingesetzt werden, die bislang für diesen Einsatz nicht freigegeben werden konnten.

Insbesondere gilt, dass die maximal erlaubte Bremskraft des Schienenbremssystems einem maximal erlaubten Bremskraftanteil an einer zulässigen Höchstbremskraft des jeweiligen Schienenbremssystems entspricht. Der maximal erlaubte Bremskraftanteil kann einem beliebigen Wert zwischen 0% und 100% der zulässigen Schienenbremssystem-Höchstbremskraft entsprechen. Erfindungsgemäß kann die Stärke der Schienenbremsung zur Vermeidung zu hoher Wärme- bzw. Energieeinträge in das Gleis auf einen bestimmten Wert begrenzt werden. Es wird demnach nicht nur ermittelt, ob eine Schienenbremsung erfolgen darf, d.h. ob ein Schienenbremssystem ein- oder ausgeschaltet werden soll, sondern es wird vielmehr bestimmt, mit welcher Stärke eine Schienenbremsung erfolgen darf. Nach den Technischen Spezifikationen für die Interoperabilität (TSI) für den europaweiten interoperablen Eisenbahnverkehr beträgt die zulässigen Höchstbremskraft eines Wirbelstrombremssystems eines Schienenfahrzeugs aufgrund der mit einer Wirbelstrombremsung verbundenen Temperaturbelastung der Schiene 360 kN. Diese Begrenzung resultiert letztlich aus einer Betrachtung einer maximal zulässigen Schienentemperatur, einer Anzahl von Bremsungen pro Zeiteinheit in einem Streckenpunkt sowie dem Streckenaufbau eines Schottergleises.

Ein Schienenbremssystem eines Schienenfahrzeugs umfasst zumindest eine Schienenbremse, beispielsweise 16 Schienenbremsen pro Schiene für den Fall eines Zugverbands aus zwei Zügen mit jeweils 8 Wagen, wobei an jedem zweiten Wagen pro Drehgestell eine Schienenbremse vorgesehen ist. Bei dem vorgegebenen Zeitraum handelt es sich insbesondere um einen Zeitraum ab einem vorgegebenen Zeitpunkt. Schienenbremsungen, die vor dem vorgegebenen Zeitpunkt liegen, brauchen bei der Bestimmung der maximal erlaubten Bremskraft des Schienenbremssystems nicht zwingend berücksichtigt zu werden, da die mit diesen Bremsungen verbundenen Temperaturerhöhungen zwischenzeitlich zumindest im Wesentlichen auf null abgeklungen sind.

Insbesondere handelt es sich bei einem Schienenbremssystem um ein Wirbelstrombremssystem. Grundsätzlich kann es sich bei einem Schienenbremssystem aber auch um ein Magnetschienenbremssystem handeln. Allgemein kann es sich bei einem Schienenbremssystem um ein unabhängig vom Rad/Schiene-Kontakt insbesondere direkt auf die Schiene wirkendes Bremssystem handeln.

Gemäß einer bevorzugten Ausführungsform der Erfindung ist vorgesehen, dass die innerhalb des vorgegebenen Zeitraums für den Streckenabschnitt gesammelten Datensätze von der zentralen Datensammelstelle an das den Streckenabschnitt nachfolgend befahrende Schienenfahrzeugs übermittelt werden und die maximal erlaubte Bremskraft des Schienenbremssystems durch das den Streckenabschnitt nachfolgend befahrende Schienenfahrzeug bestimmt wird. Die zentrale Datensammelstelle kann also die Informationen bezüglich der aufgrund von Schienenbremsungen bereits stattgefundenen Energieeinträge auf die Schienenfahrzeuge verteilen, die nachfolgend den vorgegebenen Streckenabschnitt befahren, und die Bestimmung der maximal erlaubten Bremskraft des Schienenbremssystems des jeweiligen Schienenbremssystems erfolgt dann in dem jeweiligen Schienenfahrzeug. Grundsätzlich ist die Auswertung der gesammelten Datensätze und die Bestimmung der maximal erlaubten Bremskraft des Schienenbremssystems aber auch in der zentralen Datensammelstelle möglich, und die maximal erlaubte Bremskraft des Schienenbremssystems wird an das jeweilige Schienenfahrzeug übermittelt.

Bevorzugt wird basierend auf einer Referenztemperatur und den innerhalb des vorgegebenen Zeitraums für den Streckenabschnitt gesammelten Datensätzen eine aktuelle Schienentemperatur für den Streckenabschnitt bestimmt, wobei auf Grundlage der aktuellen Schienentemperatur und der maximal zulässigen Schienentemperatur die maximal erlaubte Bremskraft des Schienenbremssystems bestimmt wird. Bei der Referenztemperatur handelt es sich insbesondere um eine zu einem vorgegebenen früheren Zeitpunkt vorliegende angenommene, geschätzte, ermittelte oder bestimmte Schienentemperatur. Insbesondere kann es sich bei der Referenztemperatur um eine Temperatur handeln, wie sie vorliegt, wenn keine Energieeinträge durch Schienenbremsungen stattfinden. Die gesammelten Datensätze entsprechen den Energieeinträgen, die in dem vorgegebenen Zeitraum stattgefunden haben, aus denen - unter Berücksichtigung des zeitlichen Verlaufs der Abkühlung der jeweiligen Temperaturerhöhung der Schiene durch die jeweilige Schienenbremsung - eine in dem vorgegebenen Zeitraum insgesamt resultierende Temperaturerhöhung des Schiene berechnet werden kann. Bei der aktuellen Schienentemperatur kann es sich um eine Temperatur handeln, die die Schiene zu dem aktuellen Zeitpunkt höchstens besitzt, wie aus den nachstehenden Erläuterung noch deutlich wird. Grundsätzlich ist es auch möglich, dass die aktuelle Schienentemperatur gemessen wird. Die maximal erlaubte Bremskraft des Schienenbremssystems kann dann mit besonders hoher Genauigkeit bestimmt werden.

Bei der Referenztemperatur kann es sich um eine vorgegebene Temperatur handeln, die die Schiene zu einem vorgegebenen früheren Zeitpunkt, beispielsweise unter Annahme eines heißen Sommertags mit starker Sonneneinstrahlung, höchstens besaß. Die tatsächliche Temperatur der Schiene zu dem vorgegebenen früheren Zeitpunkt kann daher auch niedriger gelegen haben. Der Bestimmung der aktuellen Schienentemperatur wird für diesen Fall ein Worst-Case-Szenario bezüglich Umgebungstemperatur und Energieeintrag durch direkte Sonneneinstrahlung zugrunde gelegt. Vorzugsweise wird jedoch die Umgebungstemperatur in dem Streckenabschnitt gemessen, und basierend auf der Umgebungstemperatur wird die Referenztemperatur bestimmt. Hierdurch kann besser vermieden werden, dass bei der Bestimmung der für das Schienenbremssystem maximal erlaubten Bremskraft des Schienenbremssystems ein geringerer Anteil an der zulässigen Höchstbremskraft des jeweiligen Schienenbremssystems als eigentlich erforderlich erhalten wird.

Gemäß einer bevorzugten Ausführungsform der Erfindung umfasst das den Streckenabschnitt nachfolgend befahrende Schienenfahrzeug eine Bremsanlage mit mehreren verschiedenen Bremssystem-Arten einschließlich des Schienenbremssystems, wobei bei einer Bremsung die Verteilung der Gesamtbremskraft auf die einzelnen Bremssystem-Arten durch eine Bremssteuereinrichtung des Schienenfahrzeugs in Abhängigkeit von der maximal erlaubten Bremskraft des Schienenbremssystems erfolgt. Die bestimmte maximal erlaubte Bremskraft des Schienenbremssystems kann im Rahmen eines Bremskraft-Blending berücksichtigt werden. Für den Fall, dass eine Bremsung mit dem jeweiligen Schienenbremssystem nicht mit der zulässigen Höchstbremskraft erfolgen darf, kann eine Umverteilung auf eine oder mehrere andere Bremssystem-Arten erfolgen. Bei den verschiedenen Bremssystem-Arten kann es sich beispielsweise um ein pneumatisches Bremssystem, ein generatorisches Bremssystem, ein hydraulisches Bremssystem, ein Wirbelstrombremssystem und/oder ein Magnetschienenbremssystem handeln.

Vorzugsweise wird der Einsatz des Schienenbremssystems in dem den Streckenabschnitt nachfolgend befahrenden Schienenfahrzeug durch eine Bremssteuereinrichtung des Schienenfahrzeugs automatisch, ohne manuellen Eingriff eines Triebfahrzeugführers, gesteuert. Grundsätzlich kann die bestimmte maximal erlaubte Bremskraft des Schienenbremssystems auch dem Triebfahrzeugführer angezeigt werden, der dann das Schienenbremssystem entsprechend ansteuert.

Der Ort des jeweiligen Schienenfahrzeugs kann beispielsweise durch ein insbesondere globales Navigationssystem, insbesondere GPS, bestimmt werden. Die Übermittlung des jeweiligen Datensatzes von dem jeweiligen Schienenfahrzeug an die zentrale Datensammelstelle und/oder eine Übermittlung der gesammelten Datensätze von der zentrale Datensammelstelle an das den Streckenabschnitt nachfolgend befahrende Schienenfahrzeug kann beispielsweise über ein Mobilfunknetz erfolgen.

Gemäß einer bevorzugten Ausführungsform der Erfindung ist, insbesondere in dem den Streckenabschnitt nachfolgend befahrenden Schienenfahrzeug, eine digitale Karte vorgesehen, in der das Streckennetz in verschiedene Streckenabschnitte unterteilt ist, die jeweils einer von mehreren Kategorien zugeordnet sind, wobei gemäß einer ersten Kategorie der Einsatz des Schienenbremssystems ohne Einschränkung erlaubt ist, gemäß einer zweiten Kategorie der Einsatz des Schienenbremssystems in Abhängigkeit von der Schienentemperatur erlaubt ist und gemäß einer dritten Kategorie der Einsatz des Schienenbremssystems nicht erlaubt ist. Insbesondere ist der zumindest eine vorgegebene Streckenabschnitt in der digitalen Karte hinterlegt und der zweiten Kategorie zugehörig. Bei der ersten Kategorie kann es sich beispielsweise um Strecken mit Fester Fahrbahn handeln, für die keine thermischen Beschränkungen existieren. Bei der zweiten Kategorie kann es sich beispielsweise um Strecken mit Schottergleisen oder Bereiche mit einem eine gewisse Temperaturverträglichkeit aufweisenden Gleisaufbau handeln. Bei der dritten Kategorie kann es sich beispielsweise um Bereiche mit ungeeigneten Weichen oder keine elektromagnetische Verträglichkeit aufweisenden Signalmitteln handeln.

Vorzugsweise erfolgt der Einsatz des Schienenbremssystems in einem einen jeweiligen Streckenabschnitt befahrenden Schienenfahrzeug durch eine Bremssteuereinrichtung des Schienenfahrzeugs in Abhängigkeit von der Kategorie des jeweiligen Streckenabschnitts. Insbesondere kann der Einsatz eines Schienenbremssystems eines jeweiligen Schienenfahrzeugs streckenabhängig gesteuert werden.

Die Erfindung betrifft ferner eine Vorrichtung zur Steuerung des Einsatzes von Schienenbremssystemen, insbesondere Wirbelstrombremssystemen, von in einem Streckennetz betriebenen Schienenfahrzeugen in zumindest einem vorgegebenen Streckenabschnitt, die dazu ausgebildet ist, bei Einsatz des Schienenbremssystems eines Schienenfahrzeugs in dem Streckenabschnitt jeweils einen Ort, Zeit und Bremskraft der jeweiligen Schienenbremsung, insbesondere Wirbelstrombremsung, entsprechenden Datensatz an eine zentrale Datensammelstelle zu übermitteln.

Die Erfindung betrifft weiterhin eine Vorrichtung zur Steuerung des Einsatzes eines Schienenbremssystems, insbesondere Wirbelstrombremssystems, eines einen Streckenabschnitt eines Streckennetzes befahrenden Schienenfahrzeugs, insbesondere wie sie vorstehend beschrieben ist, die dazu ausgebildet ist, basierend auf innerhalb eines vorgegebenen Zeitraums für den Streckenabschnitt gesammelten Datensätzen, die von den Streckenabschnitt zuvor befahrenden Schienenfahrzeugen an eine zentrale Datensammelstelle übermittelt wurden und jeweils Ort, Zeit und Bremskraft einer jeweiligen Schienenbremsung, insbesondere Wirbelstrombremsung, in dem Streckenabschnitt entsprechen, eine für eine Bremsung in dem Streckenabschnitt mit dem Schienenbremssystem des den Streckenabschnitt befahrenden Schienenfahrzeugs maximal erlaubte Bremskraft des Schienenbremssystems, insbesondere Wirbelstrombremskraft, zu bestimmen.

Weiterbildungen der erfindungsgemäßen Vorrichtungen ergeben sich in analoger Weise aus den Weiterbildungen des erfindungsgemäßen Verfahrens.

Weitere vorteilhafte Ausgestaltungen der Erfindung sind in den Unteransprüchen, der Figurenbeschreibung und in der Zeichnung beschrieben.

Die Erfindung wird im Folgenden beispielhaft unter Bezugnahme auf die Zeichnung beschrieben. Es zeigen,

Fig. 1 mehrere in einem Streckenabschnitt befindliche Schienenfahrzeuge,

Fig. 2 die Temperaturerhöhung einer Schiene in Abhängigkeit von der Anzahl der Wirbelstrombremsungen an einem vorgegebenen Streckenpunkt bei konstanter Zugfolge, und

Fig. 3 den Temperaturverlauf einer Schiene in einem stationären Zustand.

Bei einem Schienenfahrzeug sind bei der Verwendung einer Wirbelstrombremse verschiedene, streckenseitige Randbedingungen zu beachten, die den Einsatz der Wirbelstrombremse wesentlich beeinflussen. Insbesondere darf eine Wirbelstrombremse nicht eingesetzt werden, wenn durch deren Einsatz die Gefahr einer nicht zulässigen Temperaturerhöhung im Gleis besteht, wie es beispielsweise an Streckenpunkten, an denen mit der Taktfrequenz einer Zugfolge regelmäßig gebremst wird, auftreten kann.

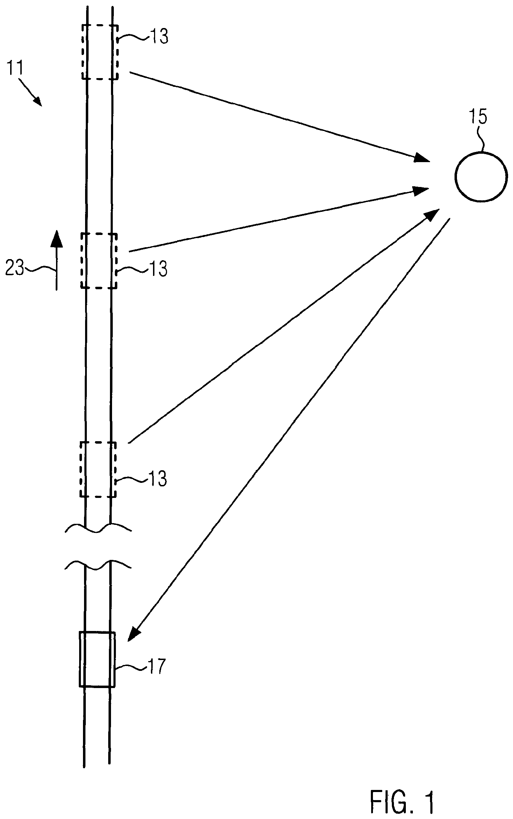

Um ein Übersteigen der maximal zulässigen Schienentemperatur in einem Streckenabschnitt 11 durch Wirbelstrombremsungen zu vermeiden, ist vorgesehen, einen jeweiligen Einsatz des Wirbelstrombremssystems eines den Streckenabschnitt 11 in einer Fahrtrichtung 23 befahrenden Schienenfahrzeugs 13 in dem jeweiligen Streckenabschnitt 11 zu registrieren und eine entsprechende Information bzw. einen entsprechenden Datensatz in Form des Orts, des Zeitpunkts und der Bremskraft der Bremsung an eine zentrale Datensammelstelle 15, beispielsweise ein Back Office, zu übermitteln (Fig. 1). Der Ort der Bremsung kann beispielsweise mittels eines in dem jeweiligen Schienenfahrzeug 13 vorgesehenen GPS-Moduls ermittelt werden. Die zentrale Datensammelstelle 15 erhält derartige Datensätze von allen Schienenfahrzeugen 13 mit Wirbelstrombremssystemen, die den Streckenabschnitt 11 befahren. Die zentrale Datensammelstelle 15 kann diese Datensätze dann wieder an alle Schienenfahrzeuge 17 verteilen, die den Streckenabschnitt 11 nachfolgend befahren. Die Kommunikation zwischen den Schienenfahrzeugen 13, 17 und der zentralen Datensammelstelle 15 kann beispielsweise über ein Mobilfunknetz erfolgen. Die gesammelten Datensätze entsprechen einer Historie der bisherigen thermischen Belastung des Streckenabschnitts 11 und lassen daher Rückschlüsse auf die aktuelle Schienentemperatur in dem Streckenabschnitt 11 zu.

Im Übrigen haben auch die Schienenfahrzeuge 13 derartige gesammelte Datensätze erhalten, und auch die Schienenfahrzeuge 17 werden bei Einsatz ihres jeweiligen Wirbelstrombremssystems einen derartigen Datensatz an die zentrale Datensammelstelle 15 übermitteln. Die Schienenfahrzeuge 13, 17 stehen daher jeweils in einer bidirektionalen Kommunikation mit der zentralen Datensammelstelle 15.

Aus den von der zentralen Datensammelstelle 15 erhaltenen Datensätzen kann das jeweilige Schienenfahrzeug 17 berechnen, mit welcher maximalen Bremskraft das Wirbelstrombremssystem in dem Streckenabschnitt 11 eingesetzt werden darf, um eine vorgegebene, maximal zulässige Schienentemperatur nicht zu überschreiten. Die maximal erlaubte Wirbelstrombremskraft kann dann im Rahmen eines Bremskraftblendings, d.h. der Verteilung der Gesamtbremskraft, mit der das Schienenfahrzeug 17 gebremst werden soll, auf die verschiedenen Bremskraftsysteme des Schienenfahrzeugs 17, automatisch berücksichtigt werden. Ist in dem Streckenabschnitt 11 eine Wirbelstrombremsung mit der zulässigen Höchstbremskraft nicht erlaubt, kann eine teilweise oder vollständige Umverteilung beispielsweise auf ein elektrisches Bremssystem oder ein Reibungsbremssystem erfolgen. Dieses Verfahren ist sowohl bei Schnellbremsungen als auch bei Betriebsbremsungen anwendbar, da das Schienenfahrzeug 17 bzw. dessen Bremsanlage vorab darüber informiert wird, welche Bremssysteme im Falle einer Bremsung verwendet werden können oder dürfen. Mit diesem Verfahren wird die Verwendung von wirbelstromgebremsten Schienenfahrzeugen auf den meisten Altbaustrecken sowie den Neubaustrecken ermöglicht.

Die Berechnung der maximalen Bremskraft des Wirbelstrombremssystems erfolgt auf der Grundlage der aktuellen Schienentemperatur und der maximal zulässigen Schienentemperatur.

Die mit einer Wirbelstrombremsung verbundene Temperaturerhöhung $\Delta T$ in der Schiene kann nach folgender Gleichung berechnet werden:

$$(1) \qquad \Delta T = \frac{n * F_{max}}{\rho_S * A_S * c_S},$$

wobei n der Anzahl der Wirbelstrombremsen des Wirbelstrombremssystems, $F_{max}$ der maximalen Bremskraft einer Wirbelstrombremse, $\rho_S$ der Dichte der Schiene, $A_S$ der Querschnittsfläche der Schiene und $c_S$ der spezifischen Wärmekapazität der Schiene entspricht.

Beispielsweise ergibt sich bei einer zulässigen Höchstbremskraft des Wirbelstrombremssystems des Schienenfahrzeugs von z.B. 240 kN bzw. 120 kN pro Schiene, 8 Wirbelstrombremsen pro Schiene, d.h. einer maximalen Bremskraft $F_{max}$ von 15 kN pro Wirbelstrombremse pro Schiene, einer Dichte $\rho_S$ von 7800 kg/m$^3$, einer Querschnittsfläche $A_S$ von 0,007689 m$^2$ und einer spezifischen Wärmekapazität $c_S$ von 462 J/kgK eine Temperaturerhöhung $\Delta T$ von 4,3 K.

Sofern der Differenz zwischen der maximal zulässigen Schienentemperatur und der aktuellen Schienentemperatur kleiner ist als die Temperaturerhöhung $\Delta T$, kann mit der vollen zulässigen Höchstbremskraft des Wirbelstrombremssystems gebremst werden. Sofern dies nicht der Fall ist, kann nur mit einer Bremskraft gebremst werden, die lediglich einem Teil der zulässigen Höchstbremskraft entspricht. Beträgt die vorgenannte Differenz beispielsweise 2 K, kann durch entsprechende Umstellung der Gleichung (1) die für eine Bremsung maximal erlaubte Wirbelstrombremskraft pro Wirbelstrombremse ermittelt werden.

Die aktuelle Schienentemperatur wird basierend auf einer Referenztemperatur und den vorgenannten gesammelten Datensätzen bestimmt. Hierbei werden die Verläufe der Temperaturerhöhungen, die aus den einzelnen Wirbelstrombremsungen resultieren, überlagert, um eine maximale Gesamttemperaturerhöhung zu bestimmen, die zu der Referenztemperatur addiert wird.

Die maximale Gesamttemperaturerhöhung $\Delta T_{max,N}$ ergibt sich bei einer konstanten Zufolge und unter der Annahme, dass die einzelnen Wirbelstrombremsungen an demselben Streckenpunkt und mit gleicher Bremskraft erfolgt sind, aus den folgenden Gleichungen:

$$(2) \qquad \Delta T_{max,N} = \Delta T * \frac{\beta^{N}-1}{\beta-1},$$

und

$$(3) \qquad \beta = e^{-\alpha * d},$$

wobei $N$ der Anzahl der Bremsungen, $\alpha$ einem Abkühlungskoeffizienten [1/s] und $d$ einer Zugfolgezeit entspricht.

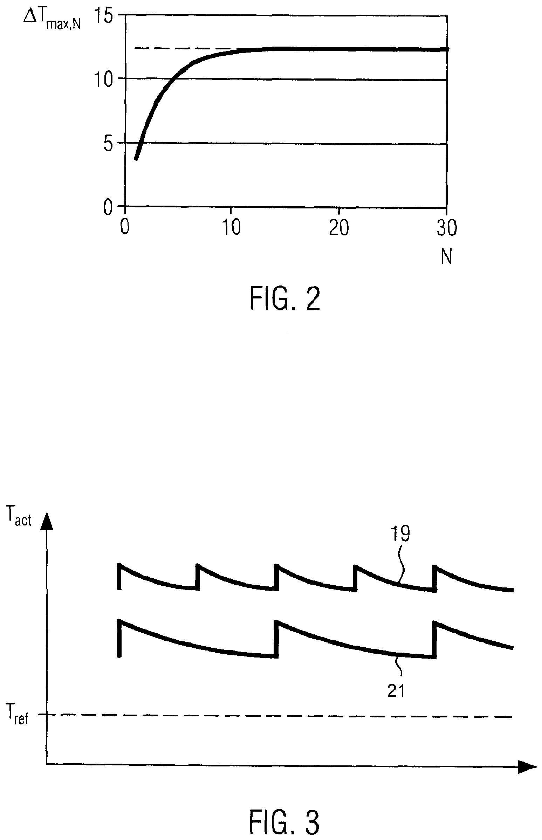

Bei einer konstanten Zugfolge von beispielsweise 20 min, einem Abkühlungskoeffizienten $\alpha$ von 0,275*10$^{-3}$ 1/s und einer mit einer Wirbelstrombremsung verbundenen Temperaturerhöhung $\Delta T$ von 4,3 K ergibt sich beispielsweise die in Fig. 2 dargestellte maximale Gesamttemperaturerhöhung $\Delta T_{max,N}$ in Abhängigkeit von der Anzahl der Bremsungen N.

Für den stationären Zustand der Schiene nach unendlich vielen Bremsungen bei konstanter Zugfolge und mit konstanter Bremskraft ergibt sich aus Gleichung (3) eine stationäre Gesamttemperaturerhöhung $\Delta T_{max,N=\infty}$ wie folgt:

$$(4) \qquad \Delta T_{max,N=\infty} = \frac{\Delta T}{1-\beta}$$

Für den vorgenannten Fall beträgt die stationäre Gesamttemperaturerhöhung $\Delta T_{max,N=\infty}$ beispielsweise 14,2 K.

Die Referenztemperatur entspricht einer Schienentemperatur, wie sie vorliegt, wenn keine Energieeinträge in die Schiene durch Wirbelstrombremsungen stattfinden (unbelasteter Fall). Die Referenztemperatur kann fest vorgegeben sein und einer Temperatur entsprechen, die die Schiene unter Worst-Case-Betrachtungen, d.h. insbesondere unter Annahme eines heißen Sommertags mit starker direkter Sonneneinstrahlung, im unbelasteten Fall höchstens besitzt. Bei der aktuellen Schienentemperatur handelt es daher nur dann um die tatsächliche aktuelle Schienentemperatur, wenn die Worst-Case-Bedingungen auch tatsächlich vorliegen. Um die Genauigkeit der Berechnung der maximal erlaubten Wirbelstrombremskraft des jeweiligen Wirbelstrombremssystems zu erhöhen, ist es jedoch bevorzugt, wenn die Referenztemperatur aus einer in dem Streckenabschnitt gemessen Umgebungstemperatur berechnet wird, so dass einem Betrieb im Winter nicht die höhere Sommer-Umgebungstemperatur zugrunde gelegt werden muss.

Fig. 3 zeigt die zeitlichen Verläufe 19, 21 der aktuellen Temperatur $T_{act}$ der Schiene im stationären Zustand für zwei verschiedene Zugfolgen. Wie aus der Fig. 3 erkennbar ist, liegt der Verlauf 19 der aktuellen stationären Schienentemperatur bei einer höheren Zugfolge höher als der entsprechende Verlauf 21 bei der niedrigeren Zugfolge. Beide Verläufe 19, 21 liegen stets über der Referenztemperatur $T_{ref}$.

In einer in dem jeweiligen Schienenfahrzeug 13, 17 hinterlegten digitalen Karte sind neben dem Streckenabschnitt 11 weitere Streckenabschnitte eines Streckennetzes eingetragen, in denen Wirbelstrombremsen nach dem vorstehend erläuterten Verfahren eingesetzt werden können. Darüber hinaus sind in der digitalen Karte auch Streckenabschnitte eingetragen, in denen Wirbelstrombremsungen grundsätzlich immer erlaubt sind, sowie Streckenabschnitte, in denen Wirbelstrombremsungen grundsätzlich nie erlaubt sind. Zur Steuerung des Einsatzes des jeweiligen Wirbelstrombremssystems kann eine Bremssteuerung des jeweiligen Schienenfahrzeugs dann auf die digitale Karte zugreifen.

## Bezugszeichenliste

| | |
|---|---|
| 11 | Streckenabschnitt |
| 13 | Schienenfahrzeug |
| 15 | zentrale Datensammelstelle |
| 17 | Schienenfahrzeug |
| 19 | Temperaturverlauf |
| 21 | Temperaturverlauf |
| 23 | Fahrtrichtung |

## Patentansprüche

1. Verfahren zur Steuerung des Einsatzes von Schienenbremssystemen, insbesondere Wirbelstrombremssystemen, von in einem Streckennetz betriebenen Schienenfahrzeugen (13, 17) in zumindest einem vorgegebenen Streckenabschnitt (11), bei dem

die Schienenfahrzeuge (13) bei Einsatz der Schienenbremssysteme in dem Streckenabschnitt (11) jeweils einen Ort, Zeit und Bremskraft der jeweiligen Schienenbremsung, insbesondere Wirbelstrombremsung, entsprechenden Datensatz an eine zentrale Datensammelstelle (15) übermitteln,

basierend auf den innerhalb eines vorgegebenen Zeitraums für den Streckenabschnitt (11) gesammelten Datensätzen eine für eine Bremsung in dem Streckenabschnitt (11) mit dem Schienenbremssystem eines den Streckenabschnitt (11) nachfolgend befahrenden Schienenfahrzeugs (17) maximal erlaubte Bremskraft des Schienenbremssystems, insbesondere Wirbelstrombremskraft, bestimmt wird, um eine maximal zulässige Schienentemperatur nicht zu überschreiten.

2. Verfahren nach Anspruch 1,
   **dadurch gekennzeichnet,**
   **dass** die innerhalb des vorgegebenen Zeitraums für den Streckenabschnitt (11) gesammelten Datensätze von der zentralen Datensammelstelle (15) an das den Streckenabschnitt (11) nachfolgend befahrende Schienenfahrzeugs (17) übermittelt werden und die maximal erlaubte Bremskraft des Schienenbremssystems durch das den Streckenabschnitt (11) nachfolgend befahrende Schienenfahrzeug (17) bestimmt wird.

3. Verfahren nach Anspruch 1 oder 2,
   **dadurch gekennzeichnet,**
   **dass** basierend auf einer Referenztemperatur und den innerhalb des vorgegebenen Zeitraums für den Streckenabschnitt (11) gesammelten Datensätzen eine aktuelle Schienentemperatur für den Streckenabschnitt (11) bestimmt wird, wobei auf Grundlage der aktuellen Schienentemperatur und der maximal zulässigen Schienentemperatur die maximal erlaubte Bremskraft des Schienenbremssystems bestimmt wird.

4. Verfahren nach Anspruch 3,
   **dadurch gekennzeichnet,**
   **dass** die Umgebungstemperatur in dem Streckenabschnitt (11) gemessen und basierend auf der Umgebungstemperatur die Referenztemperatur bestimmt wird.

5. Verfahren nach einem der vorstehenden Ansprüche,
   **dadurch gekennzeichnet,**
   **dass** das den Streckenabschnitt (11) nachfolgend befahrende Schienenfahrzeug (17) eine Bremsanlage mit mehreren verschiedenen Bremssystem-Arten einschließlich des Schienenbremssystems umfasst, wobei bei einer Bremsung die Verteilung der Gesamtbremskraft auf die einzelnen Bremssystem-Arten durch eine Bremssteuereinrichtung des Schienenfahrzeugs (17) in Abhängigkeit von der maximal erlaubten Bremskraft des Schienenbremssystems erfolgt.

6. Verfahren nach einem der vorstehenden Ansprüche,
   **dadurch gekennzeichnet,**
   **dass** der Einsatz des Schienenbremssystems in dem den Streckenabschnitt (11) nachfolgend befahrenden Schienenfahrzeug (17) durch eine Bremssteuereinrichtung des Schienenfahrzeugs (17) automatisch, ohne manuellen Eingriff eines Triebfahrzeugführers, gesteuert wird.

7. Verfahren nach einem der vorstehenden Ansprüche,
   **dadurch gekennzeichnet,**
   **dass** der Ort des jeweiligen Schienenfahrzeugs (13) durch ein Navigationssystem, insbesondere GPS, bestimmt wird.

8. Verfahren nach einem der vorstehenden Ansprüche,
   **dadurch gekennzeichnet,**
   **dass** die Übermittlung des jeweiligen Datensatzes von dem jeweiligen Schienenfahrzeug (13) an die zentrale Datensammelstelle (15) und/oder eine Übermittlung der gesammelten Datensätze von der zentrale Datensammelstelle (15) an das den Streckenabschnitt (11) nachfolgend befahrende Schienenfahrzeug (17) über ein Mobilfunknetz erfolgt.

9. Verfahren nach einem der vorstehenden Ansprüche,
   **dadurch gekennzeichnet,**
   **dass**, insbesondere in dem den Streckenabschnitt (11) nachfolgend befahrenden Schienenfahrzeug (17), eine digitale Karte vorgesehen ist, in der das Streckennetz in verschiedene Streckenabschnitte unterteilt ist, die jeweils einer von mehreren Kategorien zugeordnet sind, wobei gemäß einer ersten Kategorie der Einsatz des Schienenbremssystems ohne Einschränkung erlaubt ist, gemäß einer zweiten Kategorie der Einsatz des Schienenbremssystems in Abhängigkeit von der Schienentemperatur erlaubt ist und gemäß einer dritten Kategorie der Einsatz des Schienenbremssystems nicht erlaubt ist.

10. Verfahren nach Anspruch 9,
    **dadurch gekennzeichnet,**
    **dass** der Einsatz des Schienenbremssystems in einem einen jeweiligen Streckenabschnitt befahrenden Schienenfahrzeug durch eine Bremssteuereinrichtung des Schienenfahrzeugs (17) in Abhängigkeit von der Kategorie des jeweiligen Streckenabschnitts erfolgt.

11. Verfahren nach Anspruch 9 oder 10,
    **dadurch gekennzeichnet,**
    **dass** der zumindest eine vorgegebene Streckenabschnitt (11) in der digitalen Karte hinterlegt und der zweiten Kategorie zugehörig ist.

12. Vorrichtung zur Steuerung des Einsatzes von Schienenbremssystemen, insbesondere Wirbelstrombremssystemen, von in einem Streckennetz betriebenen Schienenfahrzeugen (13, 17) in zumindest einem vorgegebenen Streckenabschnitt (11), die dazu ausgebildet ist, bei Einsatz des Schienenbremssystems eines Schienenfahrzeugs (13) in dem Streckenabschnitt (11) jeweils einen Ort, Zeit und Bremskraft der jeweiligen Schienenbremsung, insbesondere Wirbelstrombremsung, entsprechenden Datensatz an eine zentrale Datensammelstelle (15) zu übermitteln.

13. Vorrichtung zur Steuerung des Einsatzes eines Schienenbremssystems, insbesondere Wirbelstrombremssystems, eines einen Streckenabschnitt (11) eines Streckennetzes befahrenden Schienenfahrzeugs (17), die dazu ausgebildet ist, basierend auf innerhalb eines vorgegebenen Zeitraums für den Streckenabschnitt (11) gesammelten Datensätzen, die von den Streckenabschnitt (11) zuvor befahrenden Schienenfahrzeugen (13) an eine zentrale Datensammelstelle (15) übermittelt wurden und jeweils Ort, Zeit und Bremskraft einer jeweiligen Schienenbremsung, insbesondere Wirbelstrombremsung, in dem Streckenabschnitt (11) entsprechen, eine für eine Bremsung in dem Streckenabschnitt (11) mit dem Schienenbremssystem des den Streckenabschnitt (11) befahrenden Schienenfahrzeugs (17) maximal erlaubte Bremskraft des Schienenbremssystems, insbesondere Wirbelstrombremskraft, zu bestimmen.

14. Vorrichtung nach Anspruch 13,
    **dadurch gekennzeichnet,**
    **dass** die Vorrichtung die Merkmale der Vorrichtung nach Anspruch 12 umfasst.

## Claims

1. Method for controlling the use of rail braking systems, in particular eddy current braking systems, of rail vehicles (13, 17) operated in a route network on at least one specified route segment (11), wherein

   when the rail brake system is used in the route segment (11) the rail vehicles (13) in each case transmit a dataset stating the location, time and braking force of the rail braking operation concerned, in particular an eddy current braking operation, to a central data collection point (15),
   on the basis of the datasets collected within a specified time period for the route segment (11) a maximum permitted braking force of the rail braking system, in particular an eddy current braking system, of a rail vehicle (17) subsequently due to travel along the route segment (11) is determined, in order to not to exceed a maximum acceptable rail temperature.

2. Method according to Claim 1,
   **characterised in that**
   the datasets collected within the specified time period for the route segment (11) are transmitted by the central collection point (15) to the rail vehicle (17) subsequently due to travel along the route segment (11) and the maximum permitted braking force of the rail braking system is determined by the said rail vehicle (17) subsequently due to travel along the route segment (11).

3. Method according to Claims 1 or 2,
   **characterised in that**
   on the basis of a reference temperature and the datasets collected within the specified time period for the route segment (11) a current rail temperature for the route segment (11) is determined, and having regard to the said current rail temperature and the maximum acceptable rail temperature, the maximum permitted braking force is determined.

4. Method according to Claim 3,
   **characterised in that**
   the temperature of the surroundings of the route segment (11) is measured and the reference temperature is determined having regard to the temperature of the surroundings.

5. Method according to any of the preceding claims,
   **characterised in that**
   the rail vehicle (17) subsequently due to travel along the route segment (11) has a braking unit with a plurality of different types of braking system including the rail braking system, and during a braking operation the distribution of the total braking force among the individual braking system types by a brake control unit of the rail vehicle (17) takes place as a function of the maximum permitted braking force of the rail braking system.

6. Method according to any of the preceding claims,
   **characterised in that**
   the use of the rail braking system in the rail vehicle (17) subsequently due to travel along the route segment (11) is controlled automatically by a brake control unit of the rail vehicle (17), without manual intervention by a locomotive driver.

7. Method according to any of the preceding claims,
   **characterised in that**
   the location of the respective rail vehicle (13) is determined by a navigation system, in particular GPS.

8. Method according to any of the preceding claims,
   **characterised in that**
   the dataset is transmitted in each case from the respective rail vehicle (13) to the central data collection point (15) and/or the collected datasets are transmitted by the central data collection point (15) to the rail vehicle (17) subsequently due to travel along the route segment (11), via a mobile radio network.

9. Method according to any of the preceding claims,
**characterised in that**
particularly in the rail vehicle (17) subsequently due to travel along the route segment (11) a digital map is provided, in which the route network is divided into various route segments each assigned to one of several categories, such that in a first category the unrestricted use of the rail braking system is allowed, in a second category the use of the rail braking system is allowed as a function of the rail temperature, and in a third category the use of the rail braking system is not allowed.

10. Method according to Claim 9,
**characterised in that**
the use of the rail braking system in a rail vehicle travelling on a particular route segment by a brake control unit of the rail vehicle (17) takes place as a function of the category of the route segment concerned.

11. Method according to Claims 9 or 10,
**characterised in that**
the at least one specified route segment (11) is recorded in the digital map and is assigned to the second category.

12. Device for controlling the use of rail braking systems, in particular eddy current braking systems, of rail vehicles (13, 17) operated in a route network on at least one specified route segment (11), which device is designed, when the rail braking system of a rail vehicle (13) is used on the route segment (11), in each case to transmit to a central data collection point (15) a dataset stating a location, a time and a braking force of the rail braking operation, in particular an eddy current braking operation.

13. Device for controlling the use of a rail braking system, in particular an eddy current braking system, of a rail vehicle (17) travelling along a route segment (11) of a route network, which device is designed, on the basis of datasets collected within a specified time period for the route segment (11), which datasets were transmitted to a central collection point (15) by the rail vehicles (13) that previously travelled along the route segment (11) and each of which states the location, time and braking force of a respective rail braking operation, in particular an eddy current braking operation in the route segment (11) concerned, in order to determine for a braking operation in the route segment (11) the maximum permitted braking force of the rail braking system, in particular an eddy current braking system, of the rail vehicle (17) travelling along the route segment (11).

14. Device according to Claim 13,
**characterised in that**
the device embodies the features of the device according to Claim 12.

## Revendications

1. Procédé de commande de l'utilisation de systèmes de frein sur rail, notamment de systèmes de frein à courant de Foucault, de véhicules (13, 17) ferroviaires, fonctionnant dans un réseau de voies, dans au moins une section (11) de voie donnée à l'avance, dans lequel

les véhicules (13) ferroviaires transmettent à un point (15) central de collecte de données, à l'utilisation des systèmes de frein sur rail dans la section (11) de voie, respectivement un jeu de données correspondant au lieu, au temps et à la force de frein du freinage ferroviaire, notamment du freinage par courant de Foucault, sur la base des jeux de données collectés dans un laps de temps donné à l'avance pour la section (11) de voie, on détermine une force de frein permise au maximum du système de frein sur rail, notamment une force de frein par courant de Foucault, pour un freinage dans la section (11) de voie par le système de frein sur rail d'un véhicule (17) ferroviaire parcourant ensuite la section (11) de voie, afin de ne pas dépasser une température de voie admissible au maximum.

2. Procédé suivant la revendication 1,
**caractérisé,**
**en ce que** l'on transmet les jeux de données collectés dans le laps de temps donné à l'avance pour la section (11) de voie du point (15) central de collecte de données au véhicule (17) ferroviaire parcourant ensuite la section (11) de voie, et l'on détermine la force de frein permise au maximum du système de frein sur rail par le véhicule (17) ferroviaire parcourant ensuite la section (11) de voie.

3. Procédé suivant la revendication 1 ou 2,
**caractérisé**
**en ce que**, sur la base d'une température de référence et des jeux de données collectés dans le laps de temps donné à l'avance pour la section (11) de voie, on détermine une température instantanée du rail pour la section (11) de voie, dans lequel on détermine, sur la base de la température instantanée de la voie et de la température de la voie admissible au maximum, la force de frein permise au maximum du système de frein sur rail.

4. Procédé suivant la revendication 3, **caractérisé en ce que** l'on mesure la température ambiante dans la section (11) de voie et on détermine la température de référence sur la base de la température ambiante.

5. Procédé suivant l'une des revendications précédentes, **caractérisé en ce que** le véhicule (17) ferroviaire parcourant ensuite la section (11) de voie comprend un système de frein ayant plusieurs types de système de frein différents, y compris le système de frein sur rail, dans lequel, lors d'un freinage, la répartition de la force totale de frein entre les divers types de système de frein s'effectue par un dispositif de commande de frein du véhicule (17) ferroviaire, en fonction de la force de frein permise au maximum du système de frein sur rail.

6. Procédé suivant l'une des revendications précédentes, **caractérisé en ce que** l'on commande automatiquement, sans intervention manuelle d'un conducteur de véhicule de traction, l'utilisation du système de frein sur rail dans le véhicule (17) ferroviaire parcourant ensuite la section (11) de voie par un dispositif de commande de frein du véhicule (17) ferroviaire.

7. Procédé suivant l'une des revendications précédentes, **caractérisé en ce que** l'on détermine le lieu du véhicule (13) ferroviaire par un système de navigation, notamment par GPS.

8. Procédé suivant l'une des revendications précédentes, **caractérisé en ce que** la transmission du jeu de données du véhicule (13) ferroviaire au point (15) central de collecte de données et/ou une transmission des jeux de données collectés du point (15) centrale de collecte de données au véhicule (17) ferroviaire parcourant ensuite la section (11) de voie s'effectue par un réseau de téléphonie mobile.

9. Procédé suivant l'une des revendications précédentes, **caractérisé en ce que**, notamment dans le véhicule (17) ferroviaire parcourant ensuite la section (11) de voie, est prévue une carte numérique dans laquelle le réseau de voies est subdivisé en des sections de voie différentes, qui sont affectées respectivement à l'une de plusieurs catégories, dans lequel, suivant une première catégorie, l'utilisation du système de frein sur rail est permise sans restriction, suivant une deuxième catégorie, l'utilisation du système de frein sur rail est permise en fonction de la température du rail et suivant une troisième catégorie, l'utilisation du système de frein sur rail n'est pas permise.

10. Procédé suivant la revendication 9, **caractérisé en ce que** l'utilisation du système de frein sur rail, dans un véhicule ferroviaire parcourant une section de voie, s'effectue par un dispositif de commande de frein du véhicule (17) ferroviaire en fonction de la catégorie de la section de voie.

11. Procédé suivant la revendication 9 ou 10, **caractérisé en ce que** la au moins une section (11) de voie donnée à l'avance est mémorisée dans la carte numérique et la deuxième catégorie est associée.

12. Installation de commande de l'utilisation de systèmes de frein sur rail, notamment de systèmes de frein à courant de Foucault, de véhicules (13, 17) ferroviaires, fonctionnant dans un réseau de voies, dans au moins une section (11) de voie donnée à l'avance, qui est constituée pour, lors de l'utilisation du système de frein sur rail d'un véhicule (13) ferroviaire, dans la section (11) de voie, transmettre, à un point (15) central de collecte de données, un jeu de données correspondant aux lieu, temps et force de frein du freinage sur rail, notamment du freinage par courant de Foucault.

13. Installation de commande de l'utilisation d'un système de frein sur rail, notamment d'un système de frein par courant de Foucault, d'un véhicule (17) ferroviaire parcourant une section (11) de voie d'un réseau de voies, qui est constituée pour, sur la base de jeux de données, qui ont été collectés dans un laps de temps donné à l'avance pour la section (11) de voie, qui ont été transmis à un point (15) central de collecte de données par des véhicules (13) ferroviaires parcourant auparavant la section (11) de voie et qui indiquent le lieu, le temps et la force de frein d'un freinage sur rail, notamment d'un freinage par courant de Foucault, dans la section (11) de voie, déterminer une force de frein permise au maximum du système de frein sur rail, notamment une force de frein par courant de Foucault, pour un freinage dans la section de voie par le système de frein sur rail du véhicule (17) ferroviaire parcourant la section (11) de voie.

14. Installation suivant la revendication 13, **caractérisé en ce que** l'installation comprend les caractéristiques de l'installation suivant la revendication 12.

FIG. 1

FIG. 2

FIG. 3

**IN DER BESCHREIBUNG AUFGEFÜHRTE DOKUMENTE**

**In der Beschreibung aufgeführte Patentdokumente**

- DE 102012108395 A1